# EUROPEAN PATENT APPLICATION

(11) **EP 4 745 209 A1**
(43) Date of publication of application: **20.05.2026**
(21) Application number: 24842852.6
(22) Date of filing: 11.06.2024
(51) Int. Cl.: C09J 7/35, B32B 5/18, C09J 11/04, C09J 163/00

(54) **LAMINATE AND ELECTRICAL INSULATION SHEET FOR MOTORS**

(30) Priority: 14.07.2023 JP 2023115604
(71) Applicant: Toray Industries, Inc., Tokyo 103-8666 (JP)
(72) Inventor: MIYASHITA, Masanori, Otsu-shi, Shiga 520-2141 (JP); MORI, Kentaro, Otsu-shi, Shiga 520-2141 (JP)
(74) Representative: Mewburn Ellis LLP
(86) International application number: PCT/JP2024/021130
(87) International publication number: WO 2025/018056

(57) **Abstract**

The purpose of the present invention is to provide a laminate with excellent adhesiveness and thermal conductivity. Provided is a laminate obtained by laminating a first layer which is provided with voids and a second layer which includes a base material, wherein: the first layer contains at least an epoxy resin, an acrylic resin, and an inorganic filler; the inorganic filler includes at least one type of particles selected from the group consisting of aluminum oxide particles, boron nitride particles, and aluminum nitride particles; the void ratio in the first layer is 50-80%; and the content of the inorganic filler is 60-85 mass% with respect to the total mass of the first layer.

## Description

### TECHNICAL FIELD

The present invention relates to a laminated body and to an electrical insulation sheet for motors.

### BACKGROUND ART

Commonly, motors for driving electric vehicles and hybrid vehicles, as well as motors for compressors (for industrial use, household use, etc., or for on-vehicle air conditioners), each include a stator and a rotor that rotates with an appropriate gap between it and the stator. The stator has a stator core and a plurality of coils that are wound around the stator core. The stator core has slots and the coils are accommodated inside the slots. Here, insulating material intended for electrical insulation is provided between the inner peripheral surfaces of the slots of the stator core and the coils. As a method to fix the stator core, the coils, and the insulating material, a liquid adhesive has been employed conventionally for their fixation.

On the other hand, it is proposed in recent years to use an adhesive sheet containing a foaming agent instead of the use of a liquid adhesive agent. As examples of such an adhesive sheet containing a foaming agent in place of an insulating material, Patent documents 1 and 2 have separately disclosed an adhesive sheet having an expandable adhesive layer including a substrate that carries, on one or both sides thereof, an epoxy resin containing a multifunctional epoxy resin, a phenolic resin as a curing agent, an imidazole based compound as a curing catalyst, and a thermosensitive foaming agent.

### PRIOR ART DOCUMENTS

### PATENT DOCUMENTS

Patent document 1: Japanese Unexamined Patent Publication (Kokai) No. 2020-34889
Patent document 2: Japanese Unexamined Patent Publication (Kokai) No. 2019-203062

### SUMMARY OF INVENTION

### PROBLEMS TO BE SOLVED BY THE INVENTION

In recent years, motors designed for driving electric vehicles and hybrid vehicles have been miniaturized while being improved to realize increased output, and accordingly, they are driven by increased voltage and, in order to suppress the heat generation from the motors, the aforementioned insulating materials and adhesive sheets containing foaming agents are now required to have higher thermal conductivity. In addition, they are also required to have high adhesiveness comparable to that of conventional liquid adhesives.

Although the adhesive sheets containing foaming agents disclosed in Patent documents 1 and 2 are useful due to high adhesiveness, there has been a demand for the development of a laminated body that contains voids produced by a foaming agent and, at the same time, exhibits excellent heat dissipation properties while maintaining high thermal conductivity.

In view of such a demand, the main object of the present invention is to provide a laminated body that excels in both adhesiveness and thermal conductivity.

### MEANS OF SOLVING THE PROBLEMS

To solve the problems described above, the present invention adopts a preferred embodiment that has the following constitution.
(1) A laminated body comprising a first layer having voids and a second layer containing a substrate, which are laminated together, wherein:
   the first layer contains at least an epoxy resin, an acrylic resin, and an inorganic filler;
   the inorganic filler contains at least one type of particles selected from the group consisting of aluminum oxide particles, boron nitride particles, and aluminum nitride particles;
   the voids in the first layer account for a void fraction of 50% or more and 80% or less; and
   the inorganic filler accounts for 60 mass% or more and 85 mass% or less of the total mass of the first layer.
(2) A laminated body as set forth in the paragraph (1), wherein:
   the first layer includes voids and a solid part;
   the solid part contains a first inorganic filler having an aspect ratio of 1 or more and 2 or less and a second inorganic filler having an aspect ratio of 4 or more and 20 or less;
   the content of the first inorganic filler is 40% or more and 60% or less; and
   the content of the second inorganic filler is 5% or more and 20% or less.
(3) A laminated body as set forth in the paragraph (2), wherein:
   the ratio of b/a is 0.03 or more and 0.40 or less where a is the average particle diameter of the first inorganic filler while b is the average particle diameter of the second inorganic filler.
(4) A laminated body as set forth in any one of the paragraphs (1) to (3), wherein the first layer has a thickness of 100 µm or more and 400 µm or less.
(5) A laminated body as set forth in any one of the paragraphs (1) to (3), wherein the substrate is a film made of a thermoplastic resin and the thickness of the substrate is 50 µm or more and 200 µm or less.
(6) A laminated body as set forth in any one of the paragraphs (1) to (3), wherein the thermal conductivity of the laminated body is 0.5 W/(m·K) or more while the shear adhesive strength thereof measured according to JIS Z 1541 (2009) is 0.4 MPa or more.
(7) An electrical insulation sheet for motors comprising a laminated body as set forth in any one of the paragraphs (1) to (3).

### ADVANTAGEOUS EFFECTS OF THE INVENTION

The present invention can provide a laminated body having high thermal conductivity and high adhesiveness.

### BRIEF DESCRIPTION OF THE DRAWINGS

[Fig. 1] This is a side view of the laminated body according to the present invention.
[Fig. 2] This is a side view of a sample prepared for measuring the shear adhesive strength of the laminated body according to the present invention.
[Fig. 3] This is a plan view of the sample prepared for measuring the shear adhesive strength of the laminated body according to the present invention.

### DESCRIPTION OF PREFERRED EMBODIMENTS

The laminated body according to the present invention will be described below.

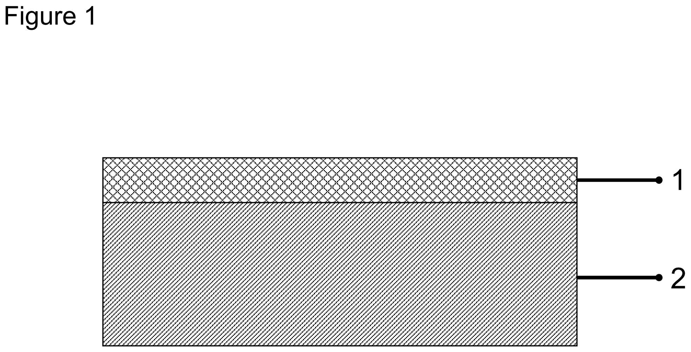

The laminated body according to the present invention is in the form of a laminated body that includes a first layer having voids and a second layer containing a substrate wherein the two layers are laminated together. The laminated body according to the present invention will be described with reference to Fig. 1. Fig. 1 is a side view of the laminated body according to the present invention in which a first layer 1 having voids and a second layer 2 containing a substrate are laminated in this order. Although not illustrated so in the figure, the laminated body according to the present invention may have a configuration in which first layers each having voids are laminated on both sides of a second layer that contains a substrate.

The first layer contains at least an epoxy resin, an acrylic resin, and an inorganic filler.

The epoxy resin is a compound having at least one or more epoxy groups or glycidyl groups and being curable through a crosslinking polymerization reaction with a curing agent. The epoxy resin may be a monomer having at least one or more epoxy groups or glycidyl groups.

For instance, the epoxy resin may be an aromatic epoxy resin, aliphatic epoxy resin, alicyclic epoxy resin, or heterocyclic epoxy resin. Specific examples of these epoxy resins include bisphenol type epoxy resins such as bisphenol A type epoxy resins and bisphenol F type epoxy resins; novolak type epoxy resins such as bisphenol A novolak type epoxy resins and cresol novolak type epoxy resins; and modified epoxy resins such as urethane modified epoxy resins and rubber modified epoxy resins. Other specific examples include biphenyl type epoxy resins, stilbene type epoxy resins, triphenolmethane type epoxy resins, alkyl modified triphenolmethane type epoxy resins, triazine nucleus-containing epoxy resins, dicyclopentadiene modified phenol type epoxy resins, naphthalene type epoxy resins, glycol type epoxy resins, and pentaerythritol type epoxy resins. The epoxy resin may be a single resin or a combination of two or more resins.

A bisphenol A type epoxy resin may be in a liquid state at room temperature or in a solid state at room temperature depending on the number of repeating units in the bisphenol skeleton. For example, a bisphenol A type epoxy resin having 2 or more and 10 or less repeating units in the bisphenol skeleton in the backbone chain is in a solid state at room temperature. In particular, the use of a bisphenol A type epoxy resin is preferred because it can serve for improvement in heat resistance.

The epoxy resin may be a monofunctional epoxy resin, a bifunctional epoxy resin, a trifunctional epoxy resin, or an epoxy resin having four or more functional groups.

From the viewpoint of ensuring high heat resistance and high adhesiveness, it is preferable that the epoxy resin contain a curing agent. There are no particular limitations on the curing agent to use, and those curing agents which are commonly used in epoxy resin based adhesives can be adopted. Specific examples of useful curing agents include imidazole based curing agents, phenol based curing agents, amine based curing agents, acid anhydride based curing agents, isocyanate based curing agents, and thiol based curing agents.

The acrylic resin is obtained by polymerizing monomer components as listed below. From the viewpoint of ensuring high heat resistance, it is preferable that the monomer components to use include a (meth)acrylic ester based monomers such as methyl (meth)acrylate, ethyl (meth)acrylate, n-butyl (meth)acrylate, t-butyl (meth)acrylate, 2-ethylhexyl (meth)acrylate, stearyl (meth)acrylate, phenyl (meth)acrylate, isobornyl (meth)acrylate, cyclohexyl (meth)acrylate, benzyl (meth)acrylate, and 2-hydroxyethyl (meth)acrylate, and a nitrile based monomer such as acrylonitrile, methacrylonitrile, and fumaronitrile. Here, the term "(meth)acrylate" refers to acrylate or methacrylate.

A preferred method for forming voids in the first layer is to use thermally expandable capsules. Typical preferred thermally expandable capsules are spherical capsules having shells of an acrylic resin as mentioned above and a liquid hydrocarbon enclosed therein. As the thermally expandable capsules are heated, the acrylic resin in the shells soften and the enclosed liquid hydrocarbon vaporizes and increases in volume, thereby expanding the capsules. As the capsules expand, they work to form the first layer, and its adhesiveness is improved as a result of an increase in the contact area with the coil and the stator core.

The inorganic filler contains at least one type of particles selected from the group consisting of aluminum oxide particles, boron nitride particles, and aluminum nitride particles. Two or more types of inorganic filler particles may be mixed for use in combination as long as the preferred effects of the present invention are not impaired. The shape of the filler particles is not particularly limited, and useful shapes include perfect sphere, sphere, scale, flake, foil, fiber, and needle. The inclusion of the inorganic filler can work to suppress the reduction in thermal conductivity caused by voids in the first layer, and thereby improve heat dissipation.

It is important for the voids to have a void fraction of 50% or more and 80% or less. For the present invention, the term "voids" refers to spaces that are present in the first layer and are identified in a cross section created by cutting the laminated body perpendicularly to the thickness direction (hereinafter occasionally referred to as "thickness-directional cross section). In addition, the term "void fraction" refers to the area percentage occupied by the voids in the cross section of the first layer of the laminated body, and it can be determined by calculating the ratio of the total area of voids relative to the entire area of the first layer, as observed in a magnified image of the thickness-directional cross section that will be described later. If the void fraction is less than 50%, the contact area between the first layer and the coil or the stator core can be reduced, which may result in a decrease in adhesiveness to the coil or the stator. If the void fraction is more than 80%, the cohesive force of the first layer can be decreased, which may result in a decrease in adhesiveness. Furthermore, the existence of an excessive number of voids can lead to a decrease in thermal conductivity, possibly resulting in a failure in achieving a sufficient degree of heat dissipation.

From the viewpoint of adhesiveness and thermal conductivity, it is important for the inorganic filler to account for a content of 60 mass% or more and 85 mass% or less relative to the total mass of the first layer. When adjusting the content of the inorganic filler, adhesiveness and thermal conductivity are in a trade-off relationship. If the content is 60 mass% or more and 85 mass% or less, it serves to secure an appropriate amount of inorganic filler necessary for ensuring heat conduction while maintaining an appropriate proportion of the resin component necessary for ensuring adhesion, thereby imparting sufficient thermal conductivity. The content of the inorganic filler was calculated by the ash content measurement method that will be described later.

It is preferable for the laminated body according to present invention to have a thermal conductivity of 0.5 W/(m·K) or more and have a shear adhesive strength of 0.4 MPa or more as measured according to JIS Z 1541 (2009). When the laminated body according to the present invention has a thermal conductivity of 0.5 W/(m·K) or more and a shear adhesive strength of 0.4 MPa or more, the laminated body tends to easily maintain strong adhesion to the coil and the stator core while exhibiting sufficient thermal conductivity for heat dissipation from the coil.

The second layer is a component that works as backbone of the laminated body. The second layer may have either a single layer structure or a multilayer structure. The total thickness of the second layer is, for example, in the range of 1 to 300 µm, but it is preferably 5 to 250 µm and more preferably 50 to 200 µm.

The second layer used for the present invention includes a substrate. The substrate preferably has insulating properties, and for example, it may be in the form of a sheet of resin, nonwoven fabrics, paper, or mesh-like material, and combinations of such sheets, as well as resin-impregnated nonwoven fabrics or paper, and mesh-like woven fabrics. In the case of a substrate made of resin, examples of good resins include polyester resins such as polyethylene terephthalate, polybutylene terephthalate, polyethylene naphthalate, and aromatic polyesters; polycarbonate; polyarylate; polyurethane; polyamide resins such as polyamide and polyetheramide; polyimide resins such as polyimide, polyetherimide, and polyamide-imide; polysulfone resins such as polysulfone and polyether sulfone; polyether ketone resins such as polyether ketone and polyether ether ketone; polyphenylene sulfide (PPS); and modified polyphenylene oxide. The glass transition temperature of the resin is, for example, 80°C or more, and may be 140°C or more, or even 200°C or more.

Examples of the aforementioned nonwoven fabrics include those nonwoven fabrics containing fibers such as basalt fibers, vinylon fibers, polyarylate fibers, polyethylene fibers, polypropylene fibers, silicon carbide fibers, cellulose fibers, polyester fibers, nylon fibers, aramid fibers, polyphenylene sulfide fibers, liquid crystal polymer fibers, and glass fibers.

The mesh-like sheets referred to above are those formed by knitting fibers such as cotton, hemp, aramid fibers, cellulose fibers, nylon fibers, polyolefin fibers, or polyphenylene sulfide fibers into sheets having square shaped openings of predetermined size.

The heat conductivity of the second sheet is preferably 0.5 W/(m·K) or more. When forming a laminated body having a thermal conductivity of 0.5 W/(m·K) or more, it is preferable that both the first layer and the second layer each have thermal conductivity of 0.5 W/(m·K) or more. To form a second layer having a higher thermal conductivity, it preferably includes the same type of inorganic filler as in the first layer.

As an example, a good method for producing the laminated body according to the present invention is described below.

An epoxy resin, thermally expandable capsules having shells of an acrylic resin that contain a liquid hydrocarbon, and an inorganic filler as mentioned above as preferred components are mixed with a solvent that can ensure a properly adjusted viscosity to enable application by the coating method described later. Thus, they are dissolved and dispersed properly to provide a coating solution. The coating solution is then applied to a preferred second layer as mentioned above by using a coating method such as die coating, roll coating, gravure roll coating, or kiss coating, or by using a printing technique etc., followed by drying to form a coat film. Hereinafter, such a layered structure having a coat film laminated on a second layer is occasionally referred to as an adhesive sheet. It should be noted that when foamed, the coat film becomes the first layer, and accordingly, the adhesive sheet after the forming step becomes the laminated body according to the present invention.

Next, the temperature is raised to a level at which the thermally expandable capsules can expand so that the inflated thermally expandable capsules form voids, thereby expanding the coat film. The thickness of the coat film before being expanded is preferably 10 to 200 µm, and the thickness of the first layer, that is, the expanded coat film, is preferably 100 to 400 µm. If they are in these ranges, the contact area with the coil and the stator core increases during expansion, and therefore the resulting laminated body will exhibit high adhesive strength and thermal conductivity. If the expansion occurs to an excessive degree, the number of voids increases and accordingly the thermal conductivity decreases, possibly reducing the cohesive strength of the coat film and leading to a reduced adhesiveness.

If the laminated body is used as an electrical insulating sheet for a motor, it will serve to provide a motor that is smaller in size and gives higher output because such a sheet can exhibit high thermal conductivity while maintaining sufficient adhesiveness to the coil and stator core even under vibration during motor operation.

It is preferable that the laminated body according to the present invention have a first layer that includes voids and a solid part, wherein the solid part contains a first inorganic filler having an aspect ratio of 1 or more and 2 or less and a second inorganic filler having an aspect ratio of 4 or more and 20 or less, with the first inorganic filler accounting for a content of 40% or more and 60% or less and the second inorganic filler accounting for a content of 5% or more and 20% or less.

For the present invention, the term "solid part" refers to the part other than the voids in the first layer.

Also for the present invention, the term "aspect ratio" means the ratio of the maximum length to the minimum length of the inorganic filler, which is determined by measuring the maximum length and minimum length of the first inorganic filler and the second inorganic filler, respectively, using a scanning electron microscope according to the method that will be described later, and calculating the aspect ratio as (maximum length) / (minimum length) based on the measurements taken.

In the second inorganic filler, which has a higher aspect ratio, inorganic filler particles tend to overlap with each other along the long side direction during void formation that is caused by an increase in the volume of thermally expandable capsules in the laminated body according to the present invention. Accordingly, inorganic filler particles come into contact more easily with each other to realize improvement in thermal conductivity, but on the other hand, cleavage can tend to be caused between inorganic filler particles due to excessive contact. This may lead to a decrease in the cohesive strength of the first layer and result in deterioration in adhesiveness. If the combination of the first inorganic filler and the second inorganic filler is employed as described above, improvement in thermal conductivity can be realized as a result of overlapping of second inorganic filler particles while cleavage can be reduced by suppressing excessive overlapping through the inclusion of the first inorganic filler, thereby ensuring strong adhesiveness.

It is preferable that for the laminated body according to the present invention, the ratio of b/a be 0.03 or more and 0.40 or less where a is the average particle diameter of the first inorganic filler while b is the average particle diameter of the second inorganic filler. If the b/a ratio is maintained in the range of 0.03 or more and 0.40 or less, excessive overlapping of second inorganic filler particles is prevented while spaces formed among first inorganic filler particles are filled with second inorganic filler particles, thereby leading to a higher thermal conductivity. The b/a ratio should be 0.03 or more and 0.40 or less and is preferably 0.04 or more and 0.30 or less, and more preferably 0.05 or more and 0.20 or less.

The average particle diameters of the first inorganic filler and the second inorganic filler were determined from the maximum length and the minimum length of each inorganic filler measured by the method that will be described later, and calculation was performed by the formula (maximum length + minimum length)/2.

### EXAMPLES

### [Methods for measurement of properties]

The constitution and effect of the present invention are described in more detail below with reference to examples. It should be noted however that the present invention should not be construed as limited to the examples given below. Prior to giving examples, methods used for measuring the various properties are described first.

### (1) Shear adhesive strength

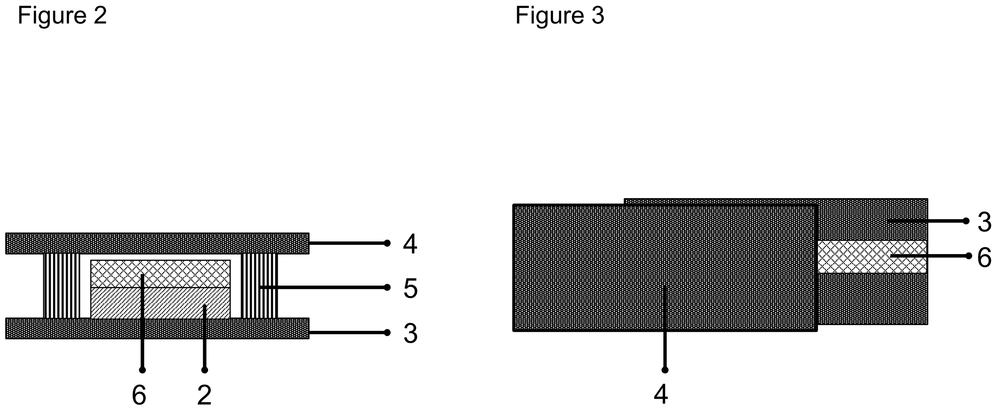

Shear adhesive strength was measured as described below according to the test method specified in JIS Z 1541 (2009). As the adherend, an SPCC plate (manufactured by Iwata Mfg. Co., Ltd., model number TF50-100-01, thickness 0.1 mm, size 50 × 100 mm) was adopted. The adhesion area on the specimen was 10 × 10 mm, and the pulling rate used for measurement was 200 mm/min. First, as shown in Fig. 2, a test piece of 10 × 100 mm was cut out from an adhesive sheet as described above and placed on an SPCC plate 3, and another SPCC plate 4 was placed thereon with two spacers 5 provided in between. The height of the spacers 5 was adjusted so that the clearance between the SPCC plate 4 and the adhesive sheet was 50 µm. This sample was heat-treated at 200°C for 7 minutes, mounted on a tensile testing machine, and subjected to measurement of the shear adhesive strength between the laminated body and the SPCC plates.

### (2) Heat conductivity

A test piece of 10 × 10 mm was cut out from the laminated body and the thermal diffusivity was measured using a laser flash type thermal diffusivity measuring apparatus LFA447, manufactured by Netzsch. In addition, the specific gravity of the laminated body was measured by the Archimedes method, and the specific heat of its cured product was measured by the DSC method. Then, the thermal conductivity was calculated as thermal diffusivity × specific gravity × specific heat.

### (3) Content of inorganic filler

The content of the inorganic filler can be measured by a general type ash content measurement method. Specifically, a 10 mg test piece was sampled only from the first layer of the laminated body, and the content was calculated from the residual fraction measured before and after testing according to JIS K7120:1987.

### (4) Void fraction

The laminated body was cut using a microtome to expose a plane perpendicular to the thickness of the laminated body. A cross-section created in this way was observed at the maximum magnification at which the first layer could be observed using a field emission type scanning electron microscope (FE-SEM) S-800, manufactured by Hitachi, Ltd., and the image captured was stored in an electronic device. Next, the stored image was transferred to an image analyzer (Luzex (registered trademark) IID, manufactured by Nireco Corporation), in which it was binarized, followed by measuring the area of voids in each layer and calculating its ratio to the area of the part corresponding to the laminated body in the image observed. Measurements were taken from five images observed at five arbitrarily selected locations, and the average value of the measurements was adopted to calculate the void fraction.

### (5) Aspect ratio

A cross-section created in the same way as used in the section "(4) Void fraction", and observed at the maximum magnification including the solid part using a field emission type scanning electron microscope (FE-SEM) S-800, manufactured by Hitachi, Ltd., and the image captured was stored in an electronic device. Next, the image was transferred to an image analyzer (image processing software "ImageJ", developed by the U.S. National Institutes of Health (NIH)), and the maximum length and minimum length of inorganic filler particles in the solid part were measured and used for calculation of the ratio of (maximum length) / (minimum length). Then, for each of the first and second inorganic fillers, 50 inorganic filler particles were observed, and the value of (maximum length) / (minimum length) was calculated for each particle, and the average of the calculated values was adopted as the aspect ratio of each of the first and second inorganic filler.

### (6) Contents of first and second inorganic fillers

An image of the solid part observed by the same method as used in the paragraph "(5) Aspect ratio" was transferred to an image analyzer (image processing software "ImageJ", developed by U.S. National Institutes of Health (NIH)), and the areas of the solid part, the first inorganic filler, and the second inorganic filler were measured separately. The same procedure was carried out for 10 images taken from different locations of the solid part, and the area occupancy ratio of each inorganic filler in the solid part was determined to represent the content of the inorganic filler. Thus, the value obtained by multiplying by 100 the average value of (area of first inorganic filler) / (area of solid part) was adopted as the content of the first inorganic filler, and the value obtained by multiplying by 100 the average value of (area of second inorganic filler) / (area of solid part) was adopted as the content of the second inorganic filler.

### (7) Average particle diameter

Next, according to the same procedure as used in the paragraph "(5) Aspect ratio", an image of the solid part was observed and transferred to an image analyzer (image processing software "ImageJ", developed by the U.S. National Institutes of Health (NIH)), and the maximum length and minimum length of first and second inorganic filler particles were measured separately and used for calculation of the ratio of (maximum length + minimum length)/2. Then, for each of the first and second inorganic fillers, 50 inorganic filler particles were observed, and the value of (maximum length + minimum length)/2 was calculated for each particle, and the average of the calculated values was adopted as the average particle diameter of each of the first and second inorganic fillers.

### [Materials used for each layer]

### 1. First layer (coating liquids a to ac)

The types of raw materials used for the first layer are as follows. Here, as the raw materials, the following commercial products were adopted. The coating liquids a to ac used to form the first layer were prepared according to the formulation shown in Table 1.
1. Epoxy resin "jER 828", bisphenol A type, epoxy equivalent weight 225 g/eq (manufactured by Mitsubishi Chemical Corporation)
2. Epoxy resin "EPICLON EXA-4850-150", bisphenol A type, epoxy equivalent weight 432 g/eq (manufactured by DIC Corporation)
3. Epoxy resin "YSLV-120TE", thioether type, epoxy equivalent weight 246 g/eq (manufactured by NIPPON STEEL Chemical & Material Co., Ltd.)
4: Curing agent "SEIKACURE-S", 4,4'-diaminodiphenyl sulfone (manufactured by Seika Corporation)
5: Curing catalyst "IS-1000", imidazole silane coupling agent (manufactured by JX Advanced Metals Corporation)
6: Thermally expandable capsule with acrylic resin shell encapsulating liquid hydrocarbon "FN-180SS", particle diameter 20 µm, maximum expansion temperature 165°C to 180°C (manufactured by Matsumoto Yushi-Seiyaku Co., Ltd.)
7: Inorganic filler "HFS-50", aluminum nitride (manufactured by Tokuyama Corporation)
8: Inorganic filler "CB-A50S", aluminum oxide (manufactured by Resonac Corporation)
9: Inorganic filler "CB-A20S", aluminum oxide (manufactured by Resonac Corporation)
10: Inorganic filler "CB-P10", aluminum oxide (manufactured by Resonac Corporation)
11: Inorganic filler "BMB-B", aluminum oxide (manufactured by Kawai Lime Industry Co., Ltd.)
12: Inorganic filler "BMT", aluminum oxide (manufactured by Kawai Lime Industry Co., Ltd.)
13: Inorganic filler "BMF", aluminum oxide (manufactured by Kawai Lime Industry Co., Ltd.)
14: Inorganic filler "BMT", aluminum oxide (manufactured by Kawai Lime Industry Co., Ltd.)
15: Inorganic filler "Al-43-KT", aluminum oxide (manufactured by Resonac Corporation)
16: Inorganic filler "BMI", aluminum oxide (manufactured by Kawai Lime Industry Co., Ltd.)
17: Inorganic filler "UHP-S2", boron nitride (manufactured by Resonac Corporation)
18: Inorganic filler "UHP-1K", boron nitride (manufactured by Resonac Corporation)
19: Inorganic filler "UHP-2", boron nitride (manufactured by Resonac Corporation)

### [Table 1-1]

**[Table 1-1]**

| items | | coating solution a | coating solution b | coating solution c | coating solution d | coating solution e | coating solution f | coating solution g | coating solution h | coating solution i | coating solution j | coating solution k | coating solution m | coating solution n | coating solution o |
|---|---|---|---|---|---|---|---|---|---|---|---|---|---|---|---|
| epoxy resin (parts by mass) | jER 828 | 20 | 20 | 20 | 20 | 20 | 20 | 20 | 20 | 20 | 20 | 20 | 20 | 20 | 20 |
| | EPICLON EXA-4850-150 | 40 | 40 | 40 | 40 | 40 | 40 | 40 | 40 | 40 | 40 | 40 | 40 | 40 | 40 |
| | YSLV-120TE | 40 | 40 | 40 | 40 | 40 | 40 | 40 | 40 | 40 | 40 | 40 | 40 | 40 | 40 |
| curing agent (parts by mass) | SEIKACURE-S | 10 | 10 | 10 | 10 | 10 | 10 | 10 | 10 | 10 | 10 | 10 | 10 | 10 | 10 |
| curing catalyst (parts by mass) | IS-1000 | 0.5 | 0.5 | 0.5 | 0.5 | 0.5 | 0.5 | 0.5 | 0.5 | 0.5 | 0.5 | 0.5 | 0.5 | 0.5 | 0.5 |
| thermally expandable capsule (parts by mass) | FN-180SS | 5.5 | 5.5 | 5.5 | 5.5 | 8.1 | 10.9 | 10.9 | 5.5 | 5.5 | 4.6 | 11.8 | 5.5 | 5.5 | 5.5 |
| inorganic filler content (mass %) | aluminum nitride HFS-50 | 60 | 70 | 85 | 31 | 60 | 60 | 85 | 55 | 90 | 60 | 60 | - | - | - |
| | aluminum oxide CB-A50S | - | - | - | - | - | - | - | - | - | - | - | - | - | - |
| | aluminum oxide CB-A20S | - | - | - | - | - | - | - | - | - | - | - | 65 | 74 | 79 |
| | aluminum oxide CB-P10 | - | - | - | 23 | - | - | - | - | - | - | - | - | - | - |
| | aluminum oxide BMB-B | - | - | - | - | - | - | - | - | - | - | - | - | - | - |
| | aluminum oxide BMT | - | - | - | - | - | - | - | - | - | - | - | - | - | - |
| | aluminum oxide BMF | - | - | - | - | - | - | - | - | - | - | - | - | - | - |
| | aluminum oxide Al-43-KT | - | - | - | - | - | - | - | - | - | - | - | - | - | - |
| | aluminum oxide BMI | - | - | - | - | - | - | - | - | - | - | - | - | - | - |
| | boron nitride UHP-S2 | - | - | - | 6 | - | - | - | - | - | - | - | 6 | 5 | 5 |
| | boron nitride UHP-1K | - | - | - | - | - | - | - | - | - | - | - | - | - | - |
| | boron nitride UHP-2 | - | - | - | - | - | - | - | - | - | - | - | - | - | - |

### [Table 1-2]

**[Table 1-2]**

| items | | coating solution p | coating solution q | coating solution r | coating solution s | coating solution t | coating solution u | coating solution v | coating solution w | coating solution x | coating solution y | coating solution z | coating solution aa | coating solution ab | coating solution ac |
|---|---|---|---|---|---|---|---|---|---|---|---|---|---|---|---|
| epoxy resin (parts by mass) | jER 828 | 20 | 20 | 20 | 20 | 20 | 20 | 20 | 20 | 20 | 20 | 20 | 20 | 20 | 20 |
| | EPICLON EXA-4850-150 | 40 | 40 | 40 | 40 | 40 | 40 | 40 | 40 | 40 | 40 | 40 | 40 | 40 | 40 |
| | YSLV-120TE | 40 | 40 | 40 | 40 | 40 | 40 | 40 | 40 | 40 | 40 | 40 | 40 | 40 | 40 |
| curing agent (parts by mass) | SEIKACURE-S | 10 | 10 | 10 | 10 | 10 | 10 | 10 | 10 | 10 | 10 | 10 | 10 | 10 | 10 |
| curing catalyst (parts by mass) | IS-1000 | 0.5 | 0.5 | 0.5 | 0.5 | 0.5 | 0.5 | 0.5 | 0.5 | 0.5 | 0.5 | 0.5 | 0.5 | 0.5 | 0.5 |
| thermally expandable capsule (parts by mass) | FN-180SS | 5.5 | 5.5 | 5.5 | 5.5 | 5.5 | 5.5 | 5.5 | 5.5 | 5.5 | 5.5 | 5.5 | 5.5 | 8.1 | 10.9 |
| inorganic filler content (mass %) | aluminum nitride HFS-50 | - | - | - | - | - | - | - | - | - | - | - | - | - | - |
| | aluminum oxide CB-A50S | - | - | - | - | - | - | - | - | 78 | - | - | - | - | - |
| | aluminum oxide CB-A20S | 64 | 82 | 54 | - | 72 | 72 | - | 72 | - | 78 | - | 42 | 42 | 42 |
| | aluminum oxide CB-P10 | - | - | - | - | - | - | - | - | - | - | - | 32 | 32 | 32 |
| | aluminum oxide BMB-B | - | - | - | 74 | - | - | - | - | - | - | - | - | - | - |
| | aluminum oxide BMT | - | - | - | - | 8 | - | - | - | - | - | - | - | - | - |
| | aluminum oxide BMF | - | - | - | - | - | 8 | - | - | - | - | - | - | - | - |
| | aluminum oxide Al-43-KT | - | - | - | - | - | - | 76 | - | - | - | - | - | - | - |
| | aluminum oxide BMI | - | - | - | - | - | - | 7 | - | - | - | - | - | - | - |
| | boron nitride UHP-S2 | 20 | 3 | 24 | 5 | - | - | - | - | 4 | - | - | 8 | 8 | 8 |
| | boron nitride UHP-1K | - | - | - | - | - | - | - | 8 | - | - | - | - | - | - |
| | boron nitride UHP-2 | - | - | - | - | - | - | - | - | - | 4 | 60 | - | - | - |

### 2. Film of polyphenylene sulfide (hereinafter referred to as PPS) (PPS-A)

For the second layer, a PPS film "Torelina" (registered trademark), manufactured by Toray Industries, inc., was used as the film of PPS. The film used had a thickness of 50 µm.

### 3. Mesh type sheet of PPS fiber impregnated with resin (PPS-B)

A mesh type sheet of PPS fiber having a fiber diameter of 55 µm, a mesh opening of 200 µm, a mesh size of 100 mesh, and a thickness of 100 µm was coated, using a comma coater, with a coating solution prepared according to the formulation shown in Table 2, which was then dried at 100°C for 3 minutes. The coating solution was applied to both sides of the above mesh type sheet of PPS fiber. Subsequently, heat treatment was performed at 150°C for 1 hour to provide a PPS-B sheet having a total thickness of 200 µm. The raw materials shown in Table 2 were the same as the raw materials of 1 to 5 listed in the section "1. First layer". Furthermore, the inorganic filler used was in the form of particles of aluminum oxide, specifically "CB-A20S" manufactured by Resonac Corporation, having a particle diameter of 21 µm.

### [Table 2]

**[Table 2]**

| items | | particle diameter (µm) | coating solution I |
|---|---|---|---|
| epoxy resin (parts by mass) | jER 828 | | 20 |
| | EPICLON EXA-4850-150 | | 40 |
| | YSLV-120TE | | 40 |
| curing agent (parts by mass) | SEIKACURE-S | | 10 |
| curing catalyst (parts by mass) | IS-1000 | | 0.5 |
| inorganic filler content (mass %) | aluminum oxide CB-A20S | 20 | 60 |

### (Examples 1 to 25 and Comparative examples 1 to 4)

The second layer shown in Table 3 was coated with a coating solution using a Baker type applicator and then dried at 100°C for 3 minutes to provide an adhesive sheet that includes the second layer laminated with a coat film (the coat film is subsequently expanded to form the first layer). Then, it was heated at 200°C for 7 minutes to expand the coat film, thereby providing a laminated body. The types of the coating solution used, the first layer, and the second layer were as shown in the tables. Results of their evaluations are given in Table 3. The laminated bodies formed in Examples 1 to 25 exhibited high adhesiveness and high thermal conductivity due to the use of a properly adjusted void fraction and inorganic filler components. In Comparative example 3, it was impossible to achieve sufficient expansion due to a low void fraction in the first layer, resulting in an insufficient adhesion area with the SPCC plate and thus showing a low shear adhesion strength.

As compared with the laminated bodies prepared in Examples 13, 14, 18, and 20 to 22, the laminated bodies prepared in Example 10 and Example 23 are characterized in that the contents, aspect ratios, and b/a ratios of the first and/or second inorganic fillers are in more favorable ranges. As a result, they avoided filling with inorganic filler particles or cleavage of the second inorganic filler, leading to higher thermal conductivity or higher shear adhesive strength.

### [Table 3]

**[Table 3]**

| | first layer | second layer | void fraction (%) | inorganic filler | first inorganic filler | | | second inorganic filler | | | b/a | thermal conductivity (W/(m·K)) | shear adhesive strength (MPa) |
|---|---|---|---|---|---|---|---|---|---|---|---|---|---|
| | | | | content (mass %) | aspect ratio | content (%) | average particle diameter (µm) | aspect ratio | content (%) | average particle diameter (µm) | | | |
| Example 1 | coating solution a | PPS-A | 50 | 60 | 1.0 | 33 | 50 | - | - | - | - | 0.31 | 1.55 |
| Example 2 | coating solution a | PPS-B | 50 | 60 | 1.0 | 33 | 50 | - | - | - | - | 0.55 | 1.54 |
| Example 3 | coating solution b | PPS-B | 50 | 70 | 1.0 | 44 | 50 | - | - | - | - | 1.03 | 0.82 |
| Example 4 | coating solution c | PPS-B | 50 | 85 | 1.0 | 66 | 50 | - | - | - | - | 1.34 | 0.41 |
| Example 5 | coating solution d | PPS-B | 50 | 60 | 1.0 | 29 | 32 | 7.5 | 5.2 | 0.7 | 0.02 | 0.74 | 1.50 |
| Example 6 | coating solution e | PPS-B | 65 | 60 | 1.0 | 33 | 50 | - | - | - | - | 0.31 | 0.73 |
| Example 7 | coating solution f | PPS-B | 80 | 60 | 1.0 | 33 | 50 | - | - | - | - | 0.21 | 0.40 |
| Example 8 | coating solution q | PPS-B | 80 | 85 | 1.0 | 66 | 50 | - | - | - | - | 1.02 | 0.22 |
| Example 9 | coating solution m | PPS-B | 50 | 71 | 1.0 | 40 | 22 | 7.5 | 5.0 | 0.7 | 0.03 | 0.60 | 0.90 |
| Example 10 | coating solution n | PPS-B | 50 | 79 | 1.0 | 52 | 22 | 7.5 | 5.0 | 0.7 | 0.03 | 0.65 | 0.70 |
| Example 11 | coating solution o | PPS-B | 50 | 84 | 1.0 | 60 | 22 | 7.5 | 5.0 | 0.7 | 0.03 | 0.73 | 0.55 |
| Example 12 | coating solution p | PPS-B | 50 | 84 | 1.0 | 45 | 22 | 7.5 | 20 | 0.7 | 0.03 | 0.77 | 0.50 |
| Example 13 | coating solution q | PPS-B | 50 | 85 | 1.0 | 62 | 22 | 7.5 | 3.6 | 0.7 | 0.03 | 0.70 | 0.41 |
| Example 14 | coating solution r | PPS-B | 50 | 78 | 1.0 | 35 | 22 | 7.5 | 22 | 0.7 | 0.03 | 0.70 | 0.22 |
| Example 15 | coating solution s | PPS-B | 50 | 79 | 2.0 | 52 | 2 | 7.5 | 5.0 | 0.7 | 0.35 | 0.65 | 0.70 |
| Example 16 | coating solution t | PPS-B | 50 | 80 | 1.0 | 52 | 22 | 5.0 | 5.0 | 3 | 0.15 | 0.56 | 0.50 |
| Example 17 | coating solution u | PPS-B | 50 | 80 | 1.0 | 52 | 22 | 20 | 5.0 | 6 | 0.30 | 0.66 | 0.40 |
| Example 18 | coating solution v | PPS-B | 50 | 80 | 2.5 | 52 | 4 | 40 | 5.0 | 4 | 1.00 | 0.55 | 0.21 |
| Example 19 | coating solution w | PPS-B | 50 | 80 | 1.0 | 52 | 22 | 5.0 | 5.0 | 8 | 0.40 | 0.75 | 0.40 |
| Example 20 | coating solution x | PPS-B | 50 | 82 | 1.0 | 52 | 50 | 7.5 | 5.0 | 0.7 | 0.01 | 0.50 | 0.55 |
| Example 21 | coating solution y | PPS-B | 50 | 82 | 1.0 | 52 | 22 | 10 | 5.0 | 11 | 0.55 | 0.48 | 0.60 |
| Example 22 | coating solution z | PPS-B | 50 | 60 | | - | - | 10 | 33 | 11 | - | 0.45 | 0.20 |
| Example 23 | coating solution aa | PPS-B | 50 | 84 | 1.0 | 50 | 15 | 7.5 | 9.6 | 0.7 | 0.05 | 0.73 | 0.55 |
| Example 24 | coating solution ab | PPS-B | 65 | 84 | 1.0 | 50 | 15 | 7.5 | 9.6 | 0.7 | 0.05 | 0.65 | 0.40 |
| Example 25 | coating solution ac | PPS-B | 80 | 84 | 1.0 | 50 | 15 | 7.5 | 9.6 | 0.7 | 0.05 | 0.52 | 0.22 |
| Comparative example 1 | coating solution h | PPS-B | 50 | 55 | 1.0 | 29 | 50 | - | - | - | - | 0.10 | 1.55 |
| Comparative example 2 | coating solution i | PPS-B | 50 | 90 | 1.0 | 71 | 50 | - | - | - | - | 1.40 | 0.05 |
| Comparative example 3 | coating solution j | PPS-B | 45 | 60 | 1.0 | 33 | 50 | - | - | - | - | 0.61 | 0.01 |
| Comparative example 4 | coating solution k | PPS-B | 85 | 60 | 1.0 | 33 | 50 | - | - | - | - | 0.10 | 0.10 |

### INDUSTRIAL APPLICABILITY

The present invention can provide a laminated body having high adhesiveness and high thermal conductivity in spite of containing voids. The laminated body according to the present invention can be suitably used for electrical insulation in motors.

### EXPLANATION OF NUMERALS

1: First layer
2: Second layer
3: SPCC plate 3
4: SPCC plate 4
5: Spacer
6: First layer before expansion

## Claims

(1) A laminated body comprising a first layer having voids and a second layer containing a substrate, which are laminated together, wherein:
the first layer contains at least an epoxy resin, an acrylic resin, and an inorganic filler;
the inorganic filler contains at least one type of particles selected from the group consisting of aluminum oxide particles, boron nitride particles, and aluminum nitride particles;
the voids in the first layer account for a void fraction of 50% or more and 80% or less; and
the inorganic filler accounts for 60 mass% or more and 85 mass% or less of the total mass of the first layer.

2. A laminated body as set forth in claim 1, wherein:
the first layer includes voids and a solid part;
the solid part contains a first inorganic filler having an aspect ratio of 1 or more and 2 or less and a second inorganic filler having an aspect ratio of 4 or more and 20 or less;
the content of the first inorganic filler is 40% or more and 60% or less; and
the content of the second inorganic filler is 5% or more and 20% or less.

3. A laminated body as set forth in claim 2, wherein:
the ratio of b/a is 0.03 or more and 0.40 or less where a is the average particle diameter of the first inorganic filler while b is the average particle diameter of the second inorganic filler.

4. A laminated body as set forth in any one of claims 1 to 3, wherein the first layer has a thickness of 100 µm or more and 400 µm or less.

5. A laminated body as set forth in any one of claims 1 to 3, wherein the substrate is a film made of a thermoplastic resin and the thickness of the substrate is 50 µm or more and 200 µm or less.

6. A laminated body as set forth in any one of claims 1 to 3, wherein the thermal conductivity is 0.5 W/(m·K) or more while the shear adhesive strength measured according to JIS Z 1541 (2009) is 0.4 MPa or more.

7. An electrical insulation sheet for motors comprising a laminated body as set forth in any one of claims 1 to 3.
